(19) Europäisches Patentamt
European Patent Office
Office européen des brevets

(11) **EP 1 995 251 A1**

(12) **EUROPEAN PATENT APPLICATION**
published in accordance with Art. 158(3) EPC

(43) Date of publication:
**26.11.2008 Bulletin 2008/48**

(21) Application number: **07738491.5**

(22) Date of filing: **07.03.2007**

(51) Int Cl.:
***C07F 15/00*** *(2006.01)* ***B01J 31/22*** *(2006.01)*

(86) International application number:
**PCT/JP2007/055020**

(87) International publication number:
**WO 2007/105747 (20.09.2007 Gazette 2007/38)**

(84) Designated Contracting States:
**DE FR GB IT**

(30) Priority: **10.03.2006 JP 2006066395**

(71) Applicant: **Toyota Jidosha Kabushiki Kaisha**
**Toyota-shi, Aichi 471-8571 (JP)**

(72) Inventors:
- **MATSUZAKA, Hiroyuki**
  **Sakai-shi, Osaka;5998531 (JP)**
- **TAKEMOTO, Shin**
  **Sakai-shi, Osaka;5998531 (JP)**
- **HIRATA, Hirohito**
  **Toyota-shi, Aichi;4718571 (JP)**

(74) Representative: **Duckworth, Timothy John**
**J.A. Kemp & Co.,**
**14 South Square,**
**Gray's Inn**
**London WC1R 5JJ (GB)**

(54) **NOVEL IRIDIUM-PLATINUM COMPLEX AND METHOD FOR PRODUCING SAME**

(57) An iridium-platinum complex of the following formula:

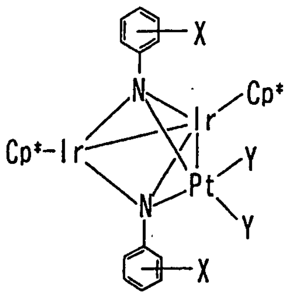

(I)

wherein Cp* is a pentamethylcyclopentadienyl ligand or the like, X is a hydrogen atom, or a substituent group such as a bromine atom or an organic group disposed at a position ortho, meta or para to the phenyl group, or at a combination of the positions, and Y is a methyl group or the like.

Fig.1

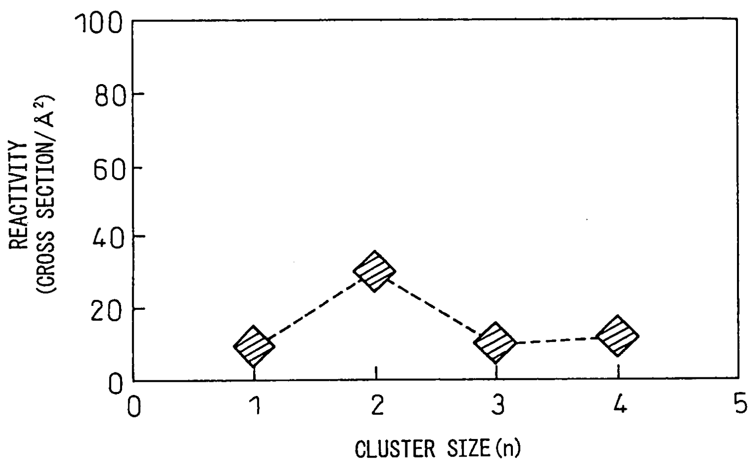


EP 1 995 251 A1

## Description

Field of the Invention

The present invention relates to an iridium-platinum complex and a method of producing the same.

Prior Art

According to research in recent years, metal clusters having a controlled size differ from a bulk metal in chemical properties such as catalytic activity and physical properties such as magnetic ones.
A method of synthesizing metal clusters having a simple controlled size and in a large amount is required to utilize the distinctive properties of the clusters. In addition, the currently known method of preparing metal clusters having a controlled size is as follows: a metal target is evaporated in vacuum to form clusters having various sizes; the clusters thus obtained are separated on the basis of the cluster size using the principle of mass spectrometry. However, the method, cannot synthesize metal clusters having a simple controlled size and in a large amount.
Distinctive properties of metal clusters are described in, for example, the reference: M. Ichihashi et al., "Adsorption and Reaction of Methanol Molecule on Nickel Cluster Ions, Nin+ (n = 3-11)," J. Phys. Chem., A, 104, 11885 (2000) (Reference 1). As shown in Fig. 1 of Reference 1, the reactivity of a platinum catalyst with methane molecules in a gas phase is greatly influenced by the platinum cluster size, and there is a cluster size optimum for the reaction.
The embodiments of the use of a catalytic action of a noble metal include purification of exhaust gas exhausted from an internal combustion engine such as an automobile engine. During purification of exhaust gas, carbon monoxide (CO), hydrocarbons (HC), nitrogen oxide ($NO_x$) and the like contained in exhaust gas are converted into carbon dioxide, nitrogen and oxygen by the catalyst component the main component of which is a noble metal such as platinum (Pt), rhodium (Rh) and iridium (Ir). In the application for purifying exhaust gas, the catalyst component that is a noble metal is in generally supported on an oxide carrier, such as alumina to provide a large contact area between the exhaust gas and the catalyst component.
A noble metal that is a catalyst component is generally supported on an oxide carrier by the following procedure: the oxide carrier is impregnated with a solution of a nitric acid salt of the noble metal or a solution of a noble metal complex having atoms of one noble metal so that the noble metal compound is dispersed on the surface of the oxide carrier; the carrier impregnated with the solution is then dried and baked. Noble metal clusters having an intended size or an intended number of atoms are difficult to obtain by such a procedure.
For such catalysts for exhaust gas purification, supporting a noble metal in the state of clusters to further improve the exhaust gas purification activity has been proposed. For example, Japanese Unexamined Patent Publication (Kokai) No. 11-285644 discloses that when a metal cluster complex having a carbonyl group as a ligand is used, a catalyst metal in the state of ultrafine particles can be directly supported on a carrier. Moreover, Japanese Unexamined Patent Publication (Kokai) No. 2006-055807 discloses that a noble metal forming a multinuclear complex can be supported on an oxide carrier by precipitating the multinuclear complex containing the noble metal on the oxide carrier and removing the organic material forming the multinuclear complex.
Furthermore, Japanese Unexamined Patent Publication (Kokai) No. 9-253490 discloses that metal clusters composed of an alloy forming a solid solution with rhodium and platinum are obtained by adding a reduction agent to a solution containing a rhodium ion and a platinum ion. As described in the reference, it is known that an alloy forming a solid solution with rhodium and platinum shows properties different from those of rhodium alone or platinum alone.
As described in the above references, in the field of catalysts, the use of noble metal clusters and noble metal alloys is known. However, none of the references disclose that noble metal alloy clusters having a controlled cluster size and a controlled alloy composition are obtained.
An object of the present invention is therefore to provide a novel iridium-platinum complex capable of giving iridium-platinum clusters having a controlled cluster size and a controlled alloy composition, and a method of producing the same.

Disclosure of the Invention

An iridium-platinum complex according to the present invention has the following formula (I):

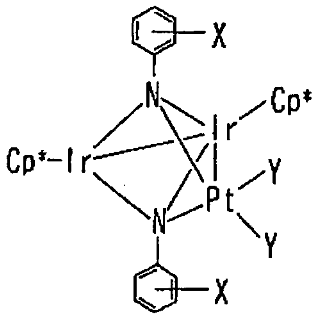

(I)

wherein Cp* is selected from the group consisting of a cyclopentadienyl ligand, a pentamethylcyclopentadienyl ligand, a pentaethylcyclopentadienyl ligand and a pentapropylcyclopentadienyl ligand, X is a hydrogen atom, or a substituent group selected from the group consisting of a fluorine atom, a chlorine atom, a bromine atom, an iodine atom, a hydroxyl group and an organic group disposed at a position ortho, meta or para to the phenyl group, or at a combination of the positions, and Y is selected from the group consisting of a methyl group, an ethyl group and a propyl group.

Because iridium and platinum are directly bonded together within the iridium-platinum complex of the present invention, iridium-platinum alloy clusters having an atomic ratio Ir/Pt of 2/1 can be obtained by removing organic material forming the complex by baking or the like procedure.

A method of producing an iridium-platinum complex of the present invention comprises the steps of:

(a) providing a compound of the following formula (II):

$$[Cp^*Ir(\mu_2\text{-}NPh\text{-}X)]_2 \qquad \text{(II)}$$

wherein Cp* is selected from the group consisting of a cyclopentadienyl ligand, a pentamethylcyclopentadienyl ligand, a pentaethylcyclopentadienyl ligand and a pentapropylcyclopentadienyl ligand, Ph is a phenyl group and X is a hydrogen atom, or a substituent group selected from the group consisting of a fluorine atom, a chlorine atom, a bromine atom, an iodine atom, a hydroxyl group and an organic group disposed at a position ortho, meta or para to the phenyl group, or at a combination of the positions;

(b) providing a compound of the following formula (III) :

$$[PtY_2(\mu_2\text{-}SZ)]_2 \qquad \text{(III)}$$

wherein Y is selected from the group consisting of a methyl group, an ethyl group and a propyl group, and Z is selected from the group consisting of a methyl group, an ethyl group and a propyl group; and

(c) mixing the compound of the formula (II) and the compound of the formula (III) in a solution.

According to the method of the present invention, the iridium-platinum complex of the present invention can be produced.

Brief Description of the Drawing

Fig. 1 is a graph excerpted from Reference 1 and showing the relationship between a Pt cluster size and a reactivity.

Best Mode for Carrying out the Invention

(Iridium-platinum complex)

An iridium-platinum complex of the present invention has the following formula (I):

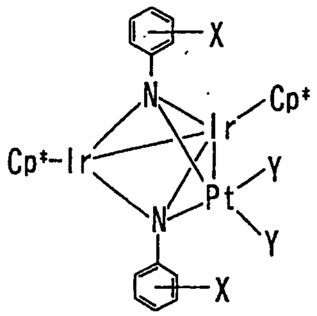

(I)

wherein Cp* is selected from the group consisting of a cyclopentadienyl ligand, a pentamethylcyclopentadienyl ligand, a pentaethylcyclopentadienyl ligand and a pentapropylcyclopentadienyl ligand, X is a hydrogen atom, or a substituent group selected from the group consisting of a fluorine atom, a chlorine atom, a bromine atom, an iodine atom, a hydroxyl group and an organic group disposed at a position ortho, meta or para to the phenyl group, or at a combination of the positions, and Y is selected from the group consisting of a methyl group, an ethyl group and a propyl group, particularly from a methyl group.

As explained above, iridium-platinum alloy clusters having iridium atoms and platinum atoms in an atomic ratio Ir/Pt of 2/1 can be provided by removing organic material from the iridium-platinum complex of the invention by baking or the like procedure, particularly by impregnating a carrier with a solution containing the complex and baking the solution.

Examples of the organic group used as the group X in the iridium-platinum complex of the invention include an organic group selected from the group consisting of an alkyl group, an alkoxy group, an alkenyl group, an alkenyloxy group, an alkynyl group, an alkynyloxy group, an aryl group, an aryloxy group, an aralkyl group and an aralkyloxy group that may have a heteroatom or an ether bond, that are substituted or nonsubstituted and that are of $C_1$-$C_{30}$ (namely, 1 to 30 carbon atoms (hereinafter used with the same meaning)), for example, these organic groups of $C_1$-$C_{10}$.

In particular, examples of the organic group used as the group X in the iridium-platinum complex of the invention include an organic group selected from the group consisting of an alkyl group, an alkoxy group, an aryl group, an aryloxy group, an aralkyl group and an aralkyloxy group that are of $C_1$-$C_{30}$, of $C_1$-$C_{10}$ in particular.

Specific examples of the alkyl group include a methyl group, an ethyl group, an n-propyl group, an isopropyl group, an n-butyl group, an isobutyl group, a sec-butyl group, a tert-butyl group, an n-pentyl group, an isopentyl group, a 2-methylbutyl group, a 1-methylbutyl group, a neopentyl group, a 1,2-dimethylpropyl group, a 1,1-dimethylpropyl group, a cyclopentyl group, an n-hexyl group, a 4-methylpentyl group, a 3-methylpentyl group, a 2-methylpentyl group, a 1-methylpentyl group, a 3,3-dimethylbutyl group, a 2,3-dimethylbutyl group, a 1,3-dimethylbutyl group, a 2,2-dimethylbutyl group, a 1,2-dimethylbutyl group, a 1,1-dimethylbutyl group, a 2-ethylbutyl group, a 1-ethylbutyl group, a 1,2,2-trimethylbutyl group, a 1,1,2-trimethylbutyl group, a 1-ethyl-2-mryhylpropyl group, a cyclohexyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2,5-dimethylhexyl group, a 2,5,5-trimethylpentyl group, a 2,4-dimethylhexyl group, a 2,2,4-trimethylpentyl group, a 3,5,5-trimethylhexyl group, an n-nonyl group, an n-decyl group, a 4-ethyloctyl group and a 4-ethyl-4,5-dimethylhexyl group.

Specific examples of the alkoxy group include an alkoxy group formed by bonding an oxygen atom to the terminal of any one of the above alkyl groups.

Specific examples of the aryl group include a phenyl group, a 4-methylphenyl group, a 3-methylphenyl group, a 2-methylphenyl group, a 4-ethylphenyl group, a 3-ethylphenyl group, a 2-ethylphenyl group, a 4-n-propylphenyl group, a 4-isopropylphenyl group, a 2-isopropylphenyl group, a 4-n-butylphenyl group, a 4-isobutylpheyl group, a 4-sec-butylphenyl group, a 2-sec-butylphenyl group, a 4-tert-butylphenyl group, a 3-tert-butylphenyl group, a 2-tert-butylphenyl group, a 1-naphthyl group and a 2-naphthyl group.

Specific examples of the aryloxy group include an aryloxy group formed by bonding an oxygen atom to the terminal of any one of the above aryl groups.

Specific examples of the aralkyl group include a benzyl group, a phenethyl group, an α-methylbenzyl group, an α,α-dimethylbenzyl group, a 1-naphthylmethyl group, a 2-naphthylmethyl group, a furfuryl group, a 2-methylbenzyl group, a 3-methylbenzyl group, a 4-methylbenzyl group, a 4-ethylbenzyl group, a 4-isopropylbenzyl group and a 4-tert-butylbenzyl group.

Specific examples of the aralkyloxy group include an aralkyloxy group obtained by bonding an oxygen atom to the terminal of any one of the above aralkyl groups.

For the iridium-platinum complex of the present invention, X may be a hydrogen atom, or a substituent group disposed at a position para to the phenyl group. The arrangement of the group X is considered to be preferable because the steric hindrance of the group X prevents the complex from becoming unstabilized. For example, X may be a hydrogen

atom, or a bromine atom or a benzyloxy group disposed at a position para to the phenyl group.

Drying and baking of the solution containing the iridium-platinum complex of the present invention can be conducted at a temperature and for a time sufficient to provide metal or metal oxide clusters. For example, the solution is dried at temperatures from 120 to 250°C over 1 to 2 hours, and then baked at temperatures from 400 to 600°C over 1 to 3 hours. Any solvent that can stably maintain the iridium-platinum complex of the invention, for example, an organic solvent such as tetrahydrofuran can be employed as a solvent of the solution used in the method.

Examples of the catalyst carrier that is considered to be used in the production of a carrier type catalyst using the metal complex of the invention include porous metal oxide carriers selected from the group consisting of, for example, alumina, ceria, zirconia, silica, titania, magnesia and a combination of these carriers.

Although the iridium-platinum complex of the present invention can be produced by any method, it can be suitably produced by the method of the invention explained below.

(Method of producing an iridium-platinum complex)

A method of synthesizing an iridium-platinum complex of the present invention comprises the following steps:

(a) providing a compound of the following formula (II):

$$[Cp^{*}Ir(\mu_2\text{-}NPh\text{-}X)]_2 \qquad (II)$$

wherein Cp* is selected from the group consisting of a cyclopentadienyl ligand, a pentamethylcyclopentadienyl ligand, a pentaethylcyclopentadienyl ligand and a pentapropylcyclopentadienyl ligand, Ph is a phenyl group and X is a hydrogen atom, or a substituent group selected from the group consisting of a fluorine atom, a chlorine atom, a bromine atom, an iodine atom, a hydroxyl group and an organic group disposed at a position ortho, meta or para to the phenyl group, or at a combination of the positions;

(b) providing a compound of the following formula (III):

$$[PtY_2(\mu_2\text{-}SZ)]_2 \qquad (III)$$

wherein Y is selected from the group consisting of a methyl group, an ethyl group and a propyl group, and Z is selected from the group consisting of a methyl group, an ethyl group and a propyl group; and

(c) mixing the compound of the formula (II) and the compound of the formula (III) in a solution.

For the groups X and Y in the method of producing an iridium-platinum complex according to the present invention, one can refer to the explanation of the iridium-platinum complex in the invention.

The method of producing an iridium-platinum complex according to the present invention can further comprise forming crystals of an iridium-platinum complex by concentrating and cooling a mixture solution obtained in the step (c) (step (d)).

The present invention is explained below by making reference to examples. However, these examples are merely intended to explain the invention, and the present invention is in no way restricted by them.

## Examples

In Examples 1 to 3 explained below, the following compounds 1a to 1c were synthesized.

The compounds 1a to 1c are represented by the following formula:

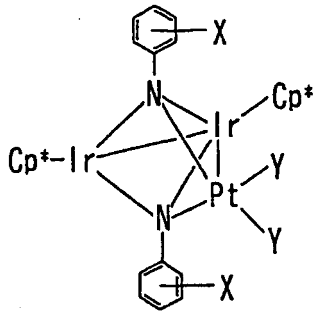

wherein Cp(Me)* represents a pentamethylcyclopentadienyl ligand, X = H for the compound 1a, X = Br for the compound 1b, and X = $CH_2Ph$ (Ph being a phenyl group) for the compound 1c.

Example 1: Synthesis of the compound 1a

The synthesis of the compound 1a is carried out by the following procedures (1) to (5). In addition, in the description of the following example, Cp(Me)* represents a pentamethylcyclopentadienyl ligand, Ph represents a phenyl group, Me represents a methyl group and Bu represents a butyl group.

(1) Synthesis of $[Cp(Me)^*IrCl_2]_2$

The synthesis of the compound is carried out by making reference to the description of the reference: R. G. Ball et al., "Synthesis and Structure of Dicarbonylbis(η-pentamethylcyclopentadienyl)diiridium," Inorganic Chemistry, 29 (10), 2023-2025. The description of the reference is herein referred to, and included in the description of the present specification.

That is, the synthesis of the compound is carried out as cited below.

Pentamethylcyclopentadiene in an excessive amount (1.5 ml) is added to iridium chloride ($IrCl_3 \cdot 3H_2O$, 2.0 g, 5.4 mmol) in 50 ml of degassed methanol. The mixture thus obtained is refluxed over 36 hours. The mixture is cooled to room temperature, and the products are separated by filtering. The products are washed with methanol at low temperature. The supernatant liquid and washing are combined, and cooled at 0°C over 24 hours (yielded amount of 2.0 g, yield of 91%).

(2) Synthesis of Cp(Me)*IrN-t-Bu

The synthesis of the compound is carried out as described in the reference: David S. Glueck et al., "Monomeric (Pentamethylcyclopentadienyl)iridium Imido Compounds: Synthesis, Structure, and Reactivity," J. Am. Chem. Soc., 113 (6), 2041-2054 (1991). The description of the reference is herein referred to, and included in the description of the present specification.

That is, the synthesis of the compound is carried out as cited below.

$[Cp(Me)^*IrCl_2]_2$ (1.00 g, 1.26 mmol) obtained in the same manner as in the above step (1), LiNH-t-Bu (420 mg, 5.32 mmol) and a stirring rod are introduced into a 100 ml flask. THF (tetrahydrofuran) (50 ml) is condensed in the flask at -196°C. The flask is placed in an ice bath, and THF is thawed while the contents are being stirred. An orange slurry becomes uniform within 5 minutes, and the solution becomes dark brown to yellow. Volatile substances are removed under reduced pressure while the flask is being made to remain in the flask. The brown to yellow residue is extracted with pentane, and the solution is filtered through cerite on frit to give a dark orange to brown solution. The pentane is removed under reduced pressure to give yellow powder in an amount of 914 mg (yield of 91%).

(3) Synthesis of $[Cp(Me)^*Ir(\mu_2\text{-}NPh)]_2$ (or $Cp(Me)^*Ir(\mu\text{-}NPh)_2IrCp(Me)^*$)

The synthesis of the compound is carried out as described in the reference: Daniel A. Dobbs et al., "Synthesis and Reactivity of Bridging Imido and Imido-Oxo Complexes of Iridium. Water-Catalyzed and -Uncatalyzed Dimerization of Terminal Iridium Imido Complexes," Organometallics, 13 (11), 4594-605 (1994). The description of the reference is herein referred to, and included in the description of the present specification.

In other words, the synthesis of the compound is carried out as cited below. Cp*IrN-t-Bu (228 mg, 0.572 mmol) obtained in the same manner as in the above step (2) and benzene (15 ml) are placed in a 25 ml flask. Aniline (55.1 mg, 0.592 mmol) is added to the solution, and the solution thus obtained is stirred at room temperature over 2 days.

Volatile substances are removed under reduced pressure of 15 mTorr over 1 hour. The black solution thus obtained is dissolved in the minimum possible amount of toluene, and crystals are obtained by forming a layer with pentane. The solution is cooled to -40°C to give black crystals (161 mg, 0.383 mmol, yield of 67%).

(4) Synthesis of $[PtMe_2(\mu_2\text{-}SMe)]_2$ (or $[\{PtMe_2\}_2(\mu\text{-}SMe_2)_2]$)

The synthesis of the compound is carried out as described in the reference: Richard J. Puddephatt et al., "Synthesis, Solution and Solid-State Structure (X-ray Analysis), and Some Reactions of the Dimer [PtMe3(μ-Ph2PCH2PPh2)]2," J. Chem. Soc., Chem. Commun., (15), 805-806 (1981). The description of the reference is herein referred to, and included in the description of the present specification.

Moreover, the synthesis of the compound can also be carried out by the procedure described in "Bis(μ-dimethylsulfide)-Bis[dimethylplatinum]," Experimental Chemistry Series, 5th ed., Vol. 21, 329-330, Maruzen, Tokyo (2004).

In other words, the synthesis can also be carried out by the procedure as cited below.

$$K_2[PtCl_4] + 2Me_2S \rightarrow \text{cis/trans-}[PtCl_2(SMe_2)_2] + 2KCl$$

$$2\text{cis/trans-}[PtCl_2(SMe_2)_2] + 4MeLi \rightarrow [\{PtMe_2\}(\mu\text{-}SMe_2)_2] + 4LiCl + 2SMe_2$$

A 500 ml three-necked flask is equipped with a magnetic rotor and a septum, and connected with a nitrogen line so that a nitrogen gas can be made to flow. Dimethyl sulfide (9.0 ml, 0.123 mol) is added to a solution of $K_2[PtCl_4]$ (7 g, 16.9 mmol) in 60 ml of distilled water while the solution is being stirred. A mixture of $[Pt(SMe_2)_4]$ $[PtCl_4]$ and cis/trans- $[PtCl_2(SMe_2)_2]$ is precipitated as a pink solid and a yellow solid. When the mixture is heated with a mantle heater for 30 minutes, all the pink product is converted into yellow cis/trans-$[PtCl_2(SMe_2)_2]$. After cooling, the mixture is extracted with 50 ml of dichloromethane 3 times. The resultant organic phase is dried over $MgSO_4$. The mixture is then filtered, and the filtered solution is concentrated under reduced pressure to give cis/trans-$[PtCl_2(SMe_2)_2]$ (cis : trans = 1:2) as bright yellow fine crystals that are air- and water-stabilized (yielded amount of 5.23 to 5.50 g, yield of 87.4 to 92.0%).

The following reaction is conducted in a dried nitrogen atmosphere with a Schrenk tube having been sufficiently dried by heating in a vacuum directly before use. A magnetic stirring rod is placed in a 500 ml Schrenk tube equipped with a septum, and finely crushed cis/trans-$[PtCl_2(SMe_2)_2]$ in an amount of 3.90 g (11.0 mmol, no cis/trans ratio influences the reaction) is suspended in 160 ml of dried ether. The mixture is cooled in an ice bath at 0°C. Ice is placed in the ice bath at a level 3 cm above that of the liquid so that the liquid can be adequately cooled. An ether solution (16 ml) of MeLi (1.4 mol/L, concentration of a halogen compound of 0.05 mol/L, 22.4 mmol) is dropped onto the liquid over 10 minutes. When the solution is stirred for 20 minutes after dropping, a white suspension is obtained (when the solution turned brown during stirring, the solution is readily subjected to after-treatment). An aqueous saturated solution of ammonium chloride in an amount of 4 ml and 100 ml of distilled water that are cooled to 0°C are added to the reaction mixture to cause hydrolysis. Using 50 ml of ether cooled to 0°C, the resultant mixture is extracted 3 times. The pale yellow extracted liquid is dried over $MgSO_4$ at 0°C. A small amount (0.2 g) of decoloring activated carbon is added to the extracted liquid, and the liquid is filtered after 5 minutes. The solvent of the filtered solution is removed under reduced pressure (15 Torr) to give $[\{PtMe_2\}_2(\mu\text{-}SMe_2)_2]$ as a white solid. The yielded amount is from 2.83 to 2.89 g (yield of 89.6 to 91.5%).

(5) Synthesis of the compound 1a

All the operations are carried out in a nitrogen atmosphere. Tetrahydrofuran (THF) and hexane are each distilled from soium/benzophenone kethyl. A deuterated solvent having been frozen and degassed 3 times and stored in the presence of a molecular sieve 4A is used.

A THF solution (20 ml) of $[PtMe_2(\mu_2\text{-}SMe)]_2$ (307 mg, 0.534 mmol) obtained in the same manner as in the above step (4) is added at room temperature to a THF solution (20 ml) of $[Cp(Me)^*Ir(\mu_2\text{-}NPh)]_2$ (904 mg, 1.077 mmol) obtained in the same manner as in the above step (3). The mixture is stirred over 5 hours without further processing. The reaction solution is concentrated to about 10 ml. Hexane in an amount of 25 ml is placed on the concentrated solution, and the solution is allowed to stand still at -20°C to give the compound 1a (486 mg, 0.404 mmol, yield of 37%) as dark green plate-like crystals.

The results of analyzing the compound 1a thus obtained are as follows.

$^1$HNMR ($CDCl_3$)

δ: 7.3 (m, 8H, aryl), 6.9 (m, 2H, aryl), 1.73 (s, 6H, $^2J_{Pt\text{-}H}$ = 87 Hz, $PtMe^*_2$), 1.38 (s, 30H, $C_5Me_5$).

$^{13}$CNMR ($CDCl_3$)

δ: 164.1, 127.3, 123.9, 121.9 (aryl), 87.6 ($C^*_5Me_5$), 9.7 ($C_5Me^*_5$), -7.4 ($^1J_{Pt\text{-}C}$ = 449 Hz, $PtMe^*_2$).

FAB-MS (Fast Atom Bombardment Mass Spectrometry) (+)

m/z = 1062 ($M^+$).
Elemental analysis
Anal. Calcd. for $C_{34}H_{46}N_2IrPt_2$.THF: C, 39.70; H, 4.59; N, 2.50.
Found: C, 40.10; H, 4.94; N, 2.35.
X-ray structure analysis (Crystallographic data for 1a)
$C_{38}H_{54}Ir_2N_2OPt$, fw = 1134.32, orthorhombic, space group Pbca, a = 16.521 (7), b = 20.669 (7), c = 21.945 (9) Å, V = 7494 (5) Å$^3$, T = 29K, Z = 8, $\mu$ (Mo-K$\alpha$) = 10.840 mm$^{-1}$, 57588 reflections measured, 8117 unique ($R_{int}$ = 0.0715), R1 = 0.0597, wR2 = 0.1416, GOF = 1.085.

Molecular structure {Selected bond distances (Å) and angles (deg)}

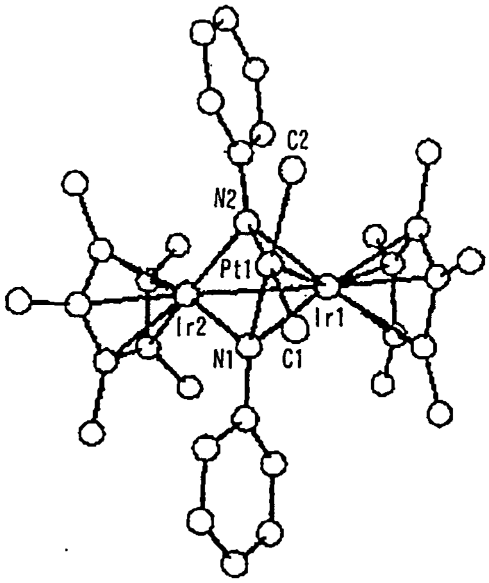


Ir1-Ir2, 2.7693 (13); Ir1-Pt1, 2.6227 (9); Ir2-Pt1, 3.2214 (10); Ir1-N1, 2.057 (8); Ir1-N2, 2.046 (9); Ir2-N1, 2.006 (9); Ir2-N2, 2.007 (8); Pt1-N1, 2.143 (9); Pt1-N2, 2.151 (9); Pt1-C1, 2.046 (14); Pt1-C2, 2.069 (12); Ir2-Ir1-Pt1, 73.317 (19); Ir1-Ir2-Pt1, 51.249 (19); Ir1-Pt-Ir2, 55.43 (3); Ir1-N1-Ir2, 85.9 (4); Ir1-N1-Pt1, 77.3 (3); Ir2-N1-Pt1, 101.8 (4); Ir1-N2-Ir2, 86.2 (3); Ir1-N2-Pt1, 77.3 (3); Ir2-N2-Pt1, 101.5 (4); N1-Pt1-N2, 68.3 (3); N1-Pt1-C1, 101.7 (5), N1-Pt1-C2, 171.2 (6); N2-Pt1-C1, 169.5 (5); N2-Pt1-C2, 103.2 (6); C1-Pt1-C2, 86.6 (7).

Example 2 Synthesis of the compound 1b

In the step (3) in Example 1, 4-bromoaniline is used in place of aniline to give [Cp(Me)*Ir($\mu_2$-$NC_6H_4Br$-4). A THF solution (5 ml) of [$PtMe_2$($\mu_2$-SMe)]$_2$ (18 mg, 0.031 mmol) obtained in the same manner as in the step (4) in Example 1 is added at room temperature to a THF solution (5 ml) of [Cp(Me)*Ir($\mu_2$-$NC_6H_4Br$-4) (51 mg, 0.051 mmol) thus obtained, and the mixture is stirred over 15 hours without further processing. The reaction solution is concentrated to about 1 ml, and a double layer recrystallization is conducted by placing 5 ml of hexane on the concentrated solution to give the compound 1b (15 mg, 0.012 mmol, yield of 24%) as black granular crystals.
$^1$HNMR ($CDCl_3$)
$\delta$: 7.33, 7.02 (d, 2H each, J = 8.7 Hz, aryl), 1.66 (s, 6H, $^2J_{Pt-H}$ = 88 Hz, $PtMe_2$), 1.24 (s, 30 H, $C_5Me_5$).
FAB-MS (+)
m/z = 1190 ($M^+$ - 2Me).
Elemental analysis
Anal. Calcd. for $C_{34}H_{44}N_2Br_2IrPt_2$: C, 33.47; H, 3.64; N, 2.30.

Example 3: Synthesis of the compound 1c

In the step (3) in Example 1, 4-benzyloxyaniline is used in place of aniline to give [Cp(Me)*Ir($\mu_2$-$NC_6H_4OCH_2Ph$-4)]$_2$. A THF solution (30 ml) of [PtMe2($\mu_2$-SMe)]$_2$ (110 mg, 0.191 mmol) obtained in the same manner as in the step (4) in Example 1 is added at room temperature to a THF solution (30 ml) of [Cp(Me)*Ir($\mu_2$-$NC_6H_4OCH_2Ph$-4)]$_2$ (410 mg,

0.391 mmol) thus obtained, and the mixture is stirred over 23 hours without further processing. The reaction solution is concentrated to about 10 ml, and double layer recrystallization is conducted by placing 25 ml of hexane on the concentrated solution to give the compound 1c (145 mg, 0.117 mmol, yield of 30%) as black granular crystals.
$^1$HNMR ($CDCl_3$)
δ: 7.41-6.96 (m, 20H, aryl), 4.88 (s, 4H, $CH_2Ph$), 1.80 (s, 6H, $^2Jp_{t-H}$ = 87 Hz, $PtMe_2$), 1. 42 (s, 30H, $C_5Me_5$).
FAB-MS (+)
m/z = 1243 ($M^+$ - 2Me).
Elemental analysis
Anal. Calcd. for $C_{48}H_{58}N_2O_2IrPt_2$: C, 45.23; H, 4.59; N, 2.20.

## Claims

1. An iridium-platinum complex of the following formula (I):

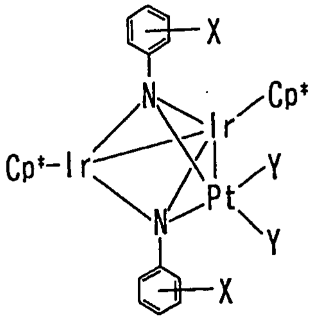

(I)

wherein Cp* is selected from the group consisting of a cyclopentadienyl ligand, a pentamethylcyclopentadienyl ligand, a pentaethylcyclopentadienyl ligand and a pentapropylcyclopentadienyl ligand, X is a hydrogen atom, or a substituent group selected from the group consisting of a fluorine atom, a chlorine atom, a bromine atom, an iodine atom, a hydroxyl group and an organic group disposed at a position ortho, meta or para to the phenyl group, or at a combination of the positions, and Y is selected from the group consisting of a methyl group, an ethyl group and a propyl group.

2. The iridium-platinum complex according to claim 1, wherein Cp* is a pentamethylcyclopentadienyl ligand.

3. The iridium-platinum complex according to claim 1 or 2, wherein Y is a methyl group.

4. The iridium-platinum complex according to any one of claims 1 to 3, wherein the organic group is selected from the group consisting of an alkyl group, an alkoxy group, an alkenyl group, an alkenyloxy group, an alkynyl group, an alkynyloxy group, an aryl group, an aryloxy group, an aralkyl group and an aralkyloxy group that may have a heteroatom or an ether bond, that are substituted or nonsubstituted and that are of $C_1$-$C_{30}$.

5. The iridium-platinum complex according to any one of claims 1 to 4, wherein the organic group is selected from the group consisting of an alkyl group, an alkoxy group, an aryl group, an aryloxy group, an aralkyl group and an aralkyloxy group that are of $C_1$-$C_{10}$.

6. The iridium-platinum complex according to any one of claims 1 to 5, wherein X is a hydrogen atom or a substituent group disposed at a position para to the phenyl group.

7. The iridium-platinum complex according to any one of claims 1 to 6, wherein X is a hydrogen atom, or a bromine atom or a benzyloxy group disposed at a position para to the phenyl group.

8. A method of synthesizing an iridium-platinum complex comprising the steps of:

(a) providing a compound of the following formula (II) :

$$[Cp^*Ir(\mu_2\text{-}NPh\text{-}X)]_2 \quad \text{(II)}$$

wherein Cp* is selected from the group consisting of a cyclopentadienyl ligand, a pentamethylcyclopentadienyl ligand, a pentaethylcyclopentadienyl ligand and a pentapropylcyclopentadienyl ligand, Ph is a phenyl group and X is a hydrogen atom, or a substituent group selected from the group consisting of a fluorine atom, a chlorine atom, a bromine atom, an iodine atom, a hydroxyl group and an organic group disposed at a position ortho, meta or para to the phenyl group, or at a combination of the positions;
(b) providing a compound of the following formula (III) :

$$[PtY_2(\mu_2\text{-}SZ)]_2 \quad \text{(III)}$$

wherein Y is selected from the group consisting of a methyl group, an ethyl group and a propyl group, and Z is selected from the group consisting of a methyl group, an ethyl group and a propyl group; and
(c) mixing the compound of the formula (II) and the compound of the formula (III) in a solution.

**9.** The method of synthesizing an iridium-platinum complex according to claims 8, wherein Cp* is a pentamethylcyclopentadienyl ligand.

**10.** The method of synthesizing an iridium-platinum complex according to claim 8 or 9, wherein Y is a methyl group.

**11.** The method of synthesizing an iridium-platinum complex according to any one of claims 8 to 10, wherein Z is a methyl group.

**12.** The method of synthesizing an iridium-platinum complex according to any one of claims 8 to 11, wherein the organic group is selected from the group consisting of an alkyl group, an alkoxy group, an alkenyl group, an alkenyloxy group, an alkynyl group, an alkynyloxy group, an aryl group, an aryloxy group, an aralkyl group and an aralkyloxy group that may have a heteroatom or an ether bond, that are substituted or nonsubstituted and that are of $C_1$-$C_{30}$.

Fig.1

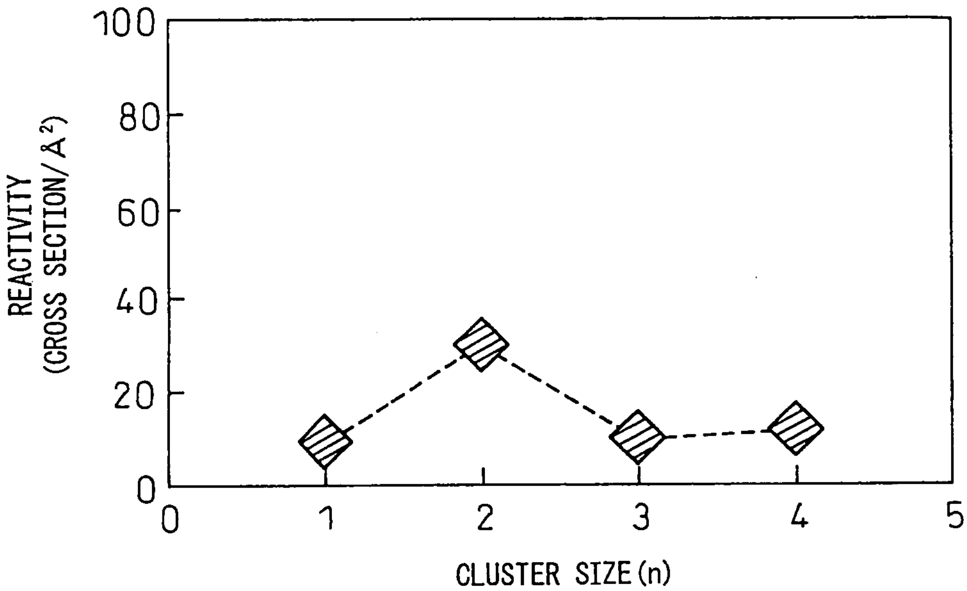
100
80
60
40
20
0
0
1
2
3
4
5
REACTIVITY
(CROSS SECTION/ Å²)
CLUSTER SIZE (n)

**INTERNATIONAL SEARCH REPORT**

International application No.
PCT/JP2007/055020

A. CLASSIFICATION OF SUBJECT MATTER
*C07F15/00*(2006.01)i, *B01J31/22*(2006.01)i

According to International Patent Classification (IPC) or to both national classification and IPC

B. FIELDS SEARCHED

Minimum documentation searched (classification system followed by classification symbols)
C07F15/00, B01J31/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2002-179695 A (Japan Science and Technology Corp.), 26 June, 2002 (26.06.02), (Family: none) | 1-12 |
| A | JP 2004-83534 A (Japan Science and Technology Corp.), 18 March, 2004 (18.03.04), (Family: none) | 1-12 |
| A | JP 2004-115401 A (Japan Science and Technology Corp.), 15 April, 2004 (15.04.04), (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 May, 2007 (24.05.07) | 12 June, 2007 (12.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

INTERNATIONAL SEARCH REPORT

International application No. PCT/JP2007/055020

C (Continuation). DOCUMENTS CONSIDERED TO BE RELEVANT

| Category* | Citation of document, with indication, where appropriate, of the relevant passages | Relevant to claim No. |
|---|---|---|
| A | YAMAMOTO, Yasuhiro et al., Quasi-octahedral complexes of pentamethylcyclopentadienyliridium (III) bearing bis(diphenylphosphinomethyl) phenylphosphine (dpmp), Dalton Transactions, 2004, (18), 2969-2978 | 1-12 |
| A | NAGAO, Shoken et al., Syntheses of a series of trinuclear MIr2 or pentanuclear MIr4 bimetallic bis(selenido) and selenido-sulfido clusters (M=Pd, Pt, Fe, Co) from diiridium μ-bis(hydroselenido) and μ-hydroselenido-hydrosulfide complexes [{(η5-C5Me5)IrCl}2 (μ-SeH)(μ-EH)] (E=Se,S), Journal of Organometallic Chemistry, 2003, 669(1-2), 124-134 | 1-12 |
| A | MASUI, D. et al., Synthesis and structures of heterobimetallic Ir2M (M: Pd, Pt) sulfido clusters and their catalytic activity for regioselective addition of alcohols to internal 1-aryl-1-alkynes, Journal of Organometallic Chemistry, 2001, 620(1-2), 69-79 | 1-12 |
| A | CASTELLANOS, Aida et al., Iridium-platinum perfluorobenzenethiolato trinuclear complexes: crystal structures of [Ir2Pt(C5Me5)2(μ-SRF) 4Cl2] (RF = C6F5 or C6F4H-p), syntheses and solution behavior, Journal of the Chemical Society, Dalton Transactions: Inorganic Chemistry, 1994, (19), 2861-6 | 1-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11285644 A
- JP 2006055807 A
- JP 9253490 A


### Non-patent literature cited in the description


- **M. ICHIHASHI et al.** Adsorption and Reaction of Methanol Molecule on Nickel Cluster Ions, Nin+ (n = 3-11. *J. Phys. Chem., A,* 2000, vol. 104, 11885
- **R. G. BALL et al.** Synthesis and Structure of Dicarbonylbis(η-pentamethylcyclopentadienyl)diiridium. *Inorganic Chemistry,* vol. 29 (10), 2023-2025
- **DAVID S. GLUECK et al.** Monomeric (Pentamethylcyclopentadienyl)iridium Imido Compounds: Synthesis, Structure, and Reactivity. *J. Am. Chem. Soc.,* 1991, vol. 113 (6), 2041-2054
- **DANIEL A. DOBBS et al.** Synthesis and Reactivity of Bridging Imido and Imido-Oxo Complexes of Iridium. Water-Catalyzed and -Uncatalyzed Dimerization of Terminal Iridium Imido Complexes. *Organometallics,* 1994, vol. 13 (11), 4594-605
- **RICHARD J. PUDDEPHATT et al.** Synthesis, Solution and Solid-State Structure (X-ray Analysis), and Some Reactions of the Dimer [PtMe3(μ-Ph2PCH2PPh. *J. Chem. Soc., Chem. Commun.,* 1981, vol. 15, 805-806
- Bis(μ-dimethylsulfide)-Bis[dimethylplatinum. Experimental Chemistry Series. Maruzen, 2004, vol. 21, 329-330